# FASCICULE DE BREVET EUROPEEN

(11) **EP 0 718 944 B1**
(45) Date de publication et mention de la délivrance du brevet: **02.12.1998**
(21) Numéro de dépôt: 95402880.9
(22) Date de dépôt: 20.12.1995
(51) Int. Cl.: H02G 3/04

(54) **Chemin de câbles en fils**
Aus Drähten zusammengesetzter Kabelkanal
Cable duct made of wires

(30) Priorité: 22.12.1994 FR 9415469
(43) Date de publication de la demande: 26.06.1996
(73) Titulaire: METAL DEPLOYE S.A., F-21500 Montbard (FR)
(72) Inventeur: Zweig, François, 91440 Bures sur Yvette (FR)
(74) Mandataire: CABINET BONNET-THIRION

(56) Documents cités:
- EP-A- 0 191 667
- EP-A- 0 556 137
- FR-A- 2 697 313

## Description

La présente invention concerne d'une manière générale les chemins de câbles, c'est-à-dire les conduits en forme de goulotte à profil transversal en U utilisés pour assurer le soutien, le logement et la protection de câbles électriques.

Elle vise plus précisément ceux de ces chemins de câbles qui, formés d'un treillis de fils, en pratique métalliques, convenablement assujettis les uns aux autres, en pratique par soudage, comportent, d'une part, des fils longitudinaux, communément appelés fils de chaîne, qui courent longitudinalement de manière rectiligne ou quasi rectiligne sur toute leur longueur, et, d'autre part, établis transversalement de place en place le long de ces fils longitudinaux, des fils transversaux, communément appelés fils de trame, qui sont dûment conformés en U au profil transversal recherché, l'ensemble formant globalement un fond, en pratique plan, et deux ailes latérales, également planes.

Plus particulièrement, encore, la présente invention vise ceux de ces chemins de câbles dont la largeur, mesurée de l'une à l'autre des ailes latérales, est au moins égale à 150 mm.

Par mesure de commodité, les fils de ces chemins de câbles ont à ce jour tous une même section transversale, exception faite parfois des fils longitudinaux de rive des ailes latérales lorsqu'ils sont soudés en T aux fils transversaux, en bout de ceux-ci.

S'agissant, en pratique, de fils de section transversale circulaire, le diamètre est donc à ce jour usuellement le même pour tous, à l'exception, parfois, comme indiqué, des fils longitudinaux de rive des ailes latérales.

La présente invention est fondée sur l'observation que, en différenciant, au contraire, la section transversale, et, donc, en pratique, le diamètre, des fils mis en oeuvre, il est avantageusement possible, les conditions étant égales par ailleurs, d'alléger un chemin de câbles en fils, et, donc, d'en réduire le coût, sans en affecter la résistance mécanique.

La présente invention a de ce fait pour objet un chemin de câbles du genre formé d'un treillis de fils comportant, d'une part, des fils longitudinaux, qui courent longitudinalement sur toute sa longueur, et, d'autre part, établis transversalement de place en place le long de ces fils longitudinaux, en étant dûment assujettis à ceux-ci, des fils transversaux, qui sont conformés en U, l'ensemble formant globalement, à la manière d'une goulotte, un fond et deux ailes latérales, ce chemin de câbles étant d'une manière générale caractérisé en ce que l'un au moins des fils longitudinaux autres que les fils de rive des ailes latérales a une section transversale inférieure à celle des autres fils.

En pratique, s'agissant de fils ronds de section transversale circulaire, tous les fils longitudinaux du fond autres que ceux les plus proches des ailes latérales ont, suivant l'invention, un diamètre inférieur à celui des autres fils longitudinaux autres que les fils longitudinaux de rive de ces ailes latérales.

A la limite, ce diamètre peut même être nul, le fond ne comportant alors suivant l'invention que deux fils longitudinaux disposés chacun respectivement au voisinage des ailes latérales, cependant que sa partie restante, et, notamment, sa partie médiane, est conjointement dépourvue de tout fil longitudinal.

Le calcul montre, et l'expérience confirme, que, à résistance mécanique donnée, caractérisée par une flèche donnée pour une charge donnée et une distance entre appuis donnée, il est ainsi possible, suivant l'invention, les autres conditions étant égales par ailleurs, de réduire de manière notable, dans des proportions pouvant aller jusqu'à 40 % dans les cas les plus favorables, le poids au mètre linéaire du chemin de câbles, et donc son coût.

Suivant l'invention, la matière nécessaire se trouve en effet disposée au mieux, là où, du point de vue de la résistance mécanique, elle est réellement utile, et il s'avère, à cet égard, qu'il est avantageusement possible d'alléger, sans incidence notable sur la résistance mécanique, les fils longitudinaux du fond autres que ceux les plus proches des ailes latérales.

Les avantages de l'invention ressortiront d'ailleurs de la description qui va suivre, à titre d'exemple, en référence aux dessins schématiques annexés sur lesquels :
la figure 1 est une vue partielle, en perspective, d'un chemin de câbles en fils suivant l'invention ;
la figure 2 en est, à échelle supérieure, une vue en coupe transversale, suivant la ligne II-II de la figure 1 ;
la figure 3 reprend, à échelle encore supérieure, le détail de la figure 2 repéré par un encart III sur cette figure 2 ;
la figure 4 est une vue en coupe transversale analogue à celle de la figure 2, pour une variante de réalisation.

Tel qu'illustré sur ces figures, le chemin de câbles 10 suivant l'invention est formé, de manière connue en soi, d'un treillis de fils comportant, d'une part, des fils longitudinaux 11, communément dits fils de chaîne, qui courent longitudinalement, par exemple de manière rectiligne, ou de manière quasi rectiligne, sur toute sa longueur, et, d'autre part, établis transversalement de place en place le long de ces fils longitudinaux 11, en étant convenablement assujettis à ceux-ci, en pratique par soudage, des fils transversaux 12, communément dits fils de trame, qui, eux, sont conformés en U, l'ensemble formant globalement, à la manière d'une goulotte, un fond 13, qui est par exemple sensiblement plan, tel que représenté, et, sensiblement d'équerre avec ce fond 13, deux ailes latérales 14, qui peuvent également être sensiblement planes, tel que représenté.

En pratique, les fils longitudinaux 11 s'étendent à l'extérieur des fils transversaux 12.

En pratique, également, tant les fils longitudinaux 11 que les fils transversaux 12 sont des fils ronds, de section transversale circulaire, et il s'agit de fils métalliques.

Soit L la largeur du fond 13 et H la hauteur des ailes latérales 14, mesurées à l'intérieur des fils transversaux 12.

Préférentiellement, et cela est le cas dans les formes de réalisation représentées, les fils longitudinaux 11 sont établis à un pas régulier sur le fond 13.

Soit P ce pas.

Mais, en pratique, les fils longitudinaux 11 extrêmes se trouvent chacun respectivement à distance des ailes latérales 14 dont ils sont proches.

Dans les formes de réalisation représentées, quatre fils longitudinaux 11 sont ainsi prévus sur le fond 13.

Mais le nombre peut en être différent, inférieur ou supérieur, suivant la largeur L.

De même, suivant leur hauteur H, les ailes latérales 14 peuvent comporter, outre un fil longitudinal 11 de rive aux extrémités des fils transversaux 12, un ou plusieurs fils longitudinaux 11.

Mais, comme précédemment, le fil longitudinal 11 de ces ailes latérales 14 le plus proche du fond 13 est à distance de celui-ci.

Dans les formes de réalisation représentées, deux fils longitudinaux 11 sont prévus sur les ailes latérales 14, en sus de leur fil longitudinal 11 de rive.

Soit D la distance séparant l'un de l'autre ces deux fils longitudinaux 11.

En pratique, cette distance D est sensiblement égale au pas P précédent.

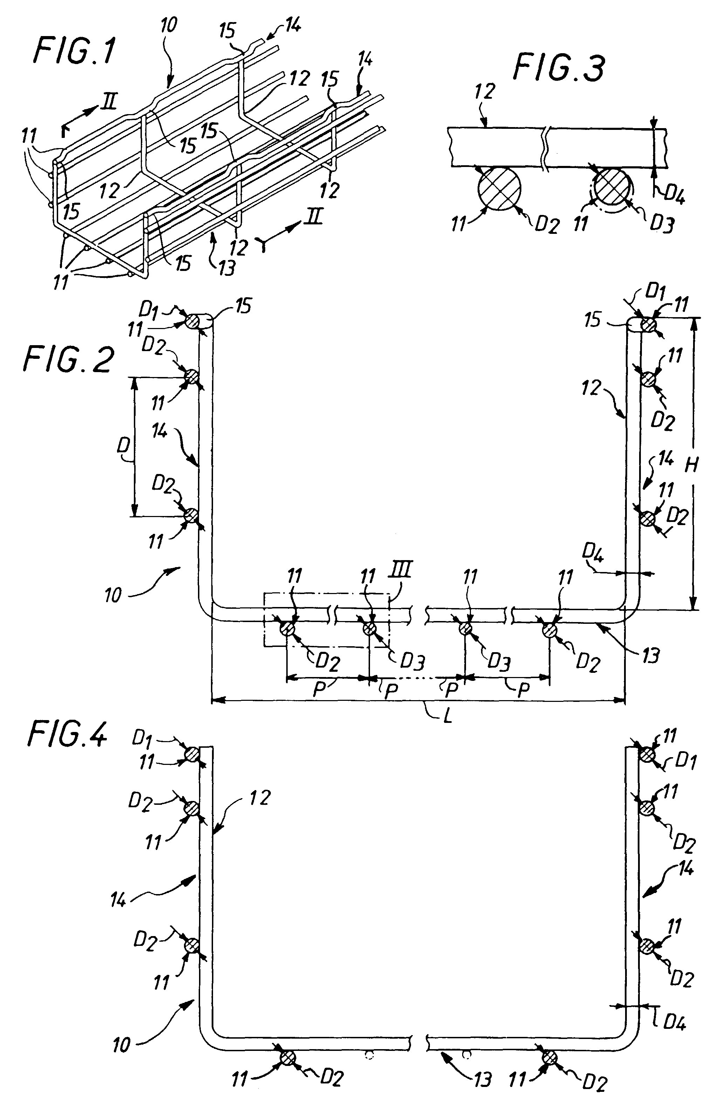

Dans la forme de réalisation plus particulièrement représentée sur les figures 1 à 3, les fils longitudinaux 11 de rive des ailes latérales 14 sont soudés en T aux fils transversaux 12.

Ils comportent donc, localement, de place en place, au droit de chacun des fils transversaux 12, une déformation en demi-onde aplatie 15 par laquelle ils sont localement aboutés à ces fils transversaux 12, tandis que, pour chacune des ailes latérales 14, leur partie courante reste dans le plan des autres fils longitudinaux 11 de celles-ci.

En variante, dans la forme de réalisation plus particulièrement représentée sur la figure 4, les fils longitudinaux 11 de rive des ailes latérales 14 sont, comme les autres, adossés latéralement aux fils transversaux 12.

Les dispositions qui précèdent sont bien connues par elles-mêmes, et, ne relevant pas en propre de la présente invention, elles ne seront pas décrites plus en détail ici.

Suivant l'invention, l'un au moins des fils longitudinaux 11 autres que les fils longitudinaux 11 de rive des ailes latérales 14 a une section transversale inférieure à celle des autres fils, qu'il s'agisse de fils longitudinaux 11 ou de fils transversaux 12.

Plus précisément, s'agissant, en pratique, comme indiqué, de fils ronds de section transversale circulaire, l'un au moins des fils longitudinaux 11 autres que les fils longitudinaux 11 de rive des ailes latérales 14 a un diamètre inférieur à celui des autres fils.

Soit, par exemple :
D1 le diamètre des fils longitudinaux 11 de rive des ailes latérales 14,
D2 le diamètre des autres fils longitudinaux 11 de ces ailes latérales 14 et celui des fils longitudinaux 11 du fond 13 les plus proches de ces ailes latérales 14,
D3 le diamètre des fils longitudinaux 11 du fond 13 autres que ceux les plus proches des ailes latérales 14, et
D4 le diamètre des fils transversaux 12.

Suivant l'invention, l'un au moins des fils longitudinaux 11 du fond 13 autres que ceux les plus proches des ailes latérales 14 a un diamètre D3 inférieur à celui D2 des autres, c'est-à-dire inférieur à celui D2 des autres fils longitudinaux 11 autres que les fils longitudinaux 11 de rive des ailes latérales 14.

En pratique, dans les formes de réalisation représentées, tous les fils longitudinaux 11 du fond 13 autres que ceux les plus proches des ailes latérales 14 ont un diamètre D3 inférieur à celui D2 des autres fils longitudinaux 11 autres que les fils longitudinaux 11 de rive des ailes latérales 14.

Sur la figure 3, l'allégement qui en résulte pour ces fils longitudinaux 11 a été rendu apparent en traits interrompus pour l'un d'eux.

Par exemple, le rapport entre les diamètres D3 et D2 est compris entre 0 et 0,9, suivant la valeur de D2.

Cela implique que, à la limite, le diamètre D3 des fils longitudinaux 11 du fond 13 autres que ceux les plus proches des ailes latérales 14 peut être nul, ou, autrement dit, que, tel que schématisé en traits interrompus sur la figure 4, ces fils longitudinaux 11 peuvent être éliminés.

Dans un tel cas, et suivant l'invention, le fond 13 ne comporte que deux fils longitudinaux 11 disposés chacun respectivement au voisinage des ailes latérales 14 tout en se situant à distance de celles-ci.

Corollairement, celui, au moins, des fils longitudinaux 11 des ailes latérales 14 qui est le plus proche du fond 13 a un diamètre D2 égal à celui D2 des fils longitudinaux 11 de ce fond 13 les plus proches de ces ailes latérales 14.

Dans les formes de réalisation représentées, il en est ainsi pour tous les fils longitudinaux 11 des ailes latérales 14, exception faite, éventuellement, des fils longitudinaux 11 de rive de celles-ci, qui, dans certains cas, et pour des raisons de commodité de fabrication, peuvent avoir un diamètre D1 inférieur.

Corollairement, les fils transversaux 12 peuvent avoir un diamètre D4 différent de celui, D2 ou D3, de certains au moins des fils longitudinaux 11 autres que les fils longitudinaux 11 de rive des ailes latérales 14.

Par exemple, ce diamètre D4 peut être intermédiaire entre celui D2 des fils longitudinaux 11 du fond 13 les plus proches des ailes latérales 14 et celui D3 des autres fils longitudinaux 11 de ce fond 13.

A titre d'exemples, il sera donné ci-après, pour une même hauteur H donnée de l'ordre par exemple de 50 à 100 mm, mais pour diverses largeurs L exprimées en mm, des valeurs possibles pour les diamètres D1, D2, D3 et D4, exprimées en mm, ainsi que pour le nombre N de fils longitudinaux 11 sur le fond 13 en sus des fils longitudinaux 11 les plus proches des ailes latérales 14, pour des chemins de câbles correspondant tous à une même résistance mécanique, c'est-à-dire pour des chemins de câbles qui, pour une même charge, sont tous l'objet d'une flèche au plus égale à 4 mm par mètre linéaire entre deux appuis écartés l'un de l'autre de 3005 mm, les fils longitudinaux 11 étant par ailleurs supposés écartés les uns des autres d'un pas égal à 50 mm :

| L | D1 | D2 | D3 | D4 | N |
|---|---|---|---|---|---|
| 150 | 5 | 5 | | 5 | 0 |
| 200 | 5 | 5 | 3 | 5 | 1 |
| 300 | 5 | 7 | 3 | 5 | 3 |
| 400 | 5 | 7 | 3 | 5 | 5 |
| 500 | 7 | 7 | 3 | 7 | 7 |

Pour les quatre premiers de ces exemples, les fils longitudinaux 11 de rive des ailes latérales 14 sont supposés être soudés en T aux fils transversaux 12, comme représenté à la figure 2, tandis que pour le cinquième ils sont supposés être adossés latéralement à ces fils transversaux 12, comme représenté sur la figure 4.

Bien entendu, les valeurs numériques indiquées dans les exemples ci-dessus ne sont données ici qu'à titre d'illustration de l'invention, et elles ne doivent en rien être considérées comme limitatives de celle-ci.

Bien qu'il s'agisse d'une disposition préférentielle, la section transversale des fils mis en oeuvre n'est pas nécessairement circulaire

Les fils longitudinaux ne sont par ailleurs pas nécessairement rectilignes ou quasi rectilignes.

On ne sortirait en effet pas du cadre de la présente invention en conférant par exemple à l'un au moins de ces fils longitudinaux une allure plus ou moins ondulée, notamment sur les ailes latérales.

On ne sortirait pas non plus du cadre de la présente invention si, au lieu d'être plats, le fond et/ou l'une au moins des ailes latérales formaient longitudinalement au moins une nervure.

Autrement dit, ce fond et/ou ces ailes latérales ne sont pas nécessairement plats.

## Revendications

1. Chemin de câbles du genre formé d'un treillis de fils comportant, d'une part, des fils longitudinaux (11), qui courent longitudinalement sur toute sa longueur, et, d'autre part, établis transversalement de place en place le long de ces fils longitudinaux (11), en étant dûment assujettis à ceux-ci, des fils transversaux (12), qui sont conformés en U, l'ensemble formant globalement, à la manière d'une goulotte, un fond (13) et deux ailes latérales (14), caractérisé en ce que l'un au moins des fils longitudinaux (11) autres que les fils longitudinaux (11) de rive des ailes latérales (14) a une section transversale inférieure à celle des autres fils.

2. Chemin de câbles suivant la revendication 1, caractérisé en ce que, s'agissant de fils ronds de section transversale circulaire, l'un au moins des fils longitudinaux (11) autres que les fils longitudinaux (11) de rive des ailes latérales (14) a un diamètre inférieur à celui des autres fils.

3. Chemin de câbles suivant la revendication 2, caractérisé en ce que tous les fils longitudinaux (11) du fond (13) autres que ceux les plus proches des ailes latérales (14) ont un diamètre (D3) inférieur à celui (D2) des autres fils longitudinaux (11) autres que les fils longitudinaux (11) de rive de ces ailes latérales (14).

4. Chemin de câbles suivant la revendication 3, caractérisé en ce que le rapport entre les diamètres (D3) et (D2) est compris entre 0 et 0,9.

5. Chemin de câbles suivant la revendication 4, caractérisé en ce que le fond (13) ne comporte que deux fils longitudinaux (11) disposés chacun respectivement au voisinage des ailes latérales (14).

6. Chemin de câbles suivant l'une quelconque des revendications 2 à 5, caractérisé en ce que les fils transversaux (12) ont un diamètre (D4) différent de celui (D2 ou D3) de certains au moins des fils longitudinaux (11) autres que les fils longitudinaux (11) de rive des ailes latérales (14).

7. Chemin de câbles suivant la revendication 6, caractérisé en ce que les fils transversaux (12) ont un diamètre (D4) intermédiaire entre celui (D2) des fils longitudinaux (11) du fond (13) les plus proches des ailes latérales (14) et celui (D3) des autres fils longitudinaux (11) de ce fond (13).

8. Chemin de câbles suivant l'une quelconque des revendications 2 à 7, caractérisé en ce que celui au moins des fils longitudinaux (11) des ailes latérales (14) qui est le plus proche du fond (13) a un diamètre (D2) égal à celui (D2) des fils longitudinaux (11) de ce fond (13) les plus proches de ces ailes latérales (14).

## Patentansprüche

1. Kabelkanal der Art, die aus einem Geflecht oder Gitter aus Drähten gebildet ist, umfassend einerseits Längsdrähte (11), die über seine ganze Länge in Längsrichtung verlaufen, sowie andererseits Querdrähte (12), die als Querverbindungen von Stelle zu Stelle entlang den Längsdrähten (11) vorgesehen und in angemessener Weise an diesen angebracht sind sowie U-Form haben, wobei die Anordnung global gesehen nach Art einer Rinne oder eines Kanals mit einem Boden (13) und zwei seitlichen Flügeln (14) ausgebildet ist, dadurch gekennzeichnet, daß wenigstens einer der Längsdrähte (11), die nicht die Längsdrähte (11) am Rand der seitlichen Flügel (14) sind, einen Querschnitt aufweist, der kleiner als der der anderen Drähte ist.

2. Kabelkanal nach Anspruch 1, dadurch gekennzeichnet, daß bei runden Drähten mit kreisförmigem Querschnitt wenigstens einer der Längsdrähte (11) außer denen am Rand der seitlichen Flügel (14) einen Durchmesser besitzt, der kleiner als derjenige der anderen Drähte ist.

3. Kabelkanal nach Anspruch 2, dadurch gekennzeichnet, daß alle Längsdrähte (11) des Bodens (13), anders als diejenigen, die den seitlichen Flügeln (14) am nächsten liegen, einen Durchmesser (D3) haben, der kleiner als derjenige (D2) der anderen Längsdrähte (11) ist, anders als die Längsdrähte (11) am Rand der seitlichen Flügel (14).

4. Kabelkanal nach Anspruch 3, dadurch gekennzeichnet, daß das Verhältnis zwischen den Durchmessern (D3) und (D2) zwischen 0 und 0,9 enhalten ist.

5. Kabelkanal nach Anspruch 4, dadurch gekennzeichnet, daß der Boden (13) nur zwei Längsdrähte (11) aufweist, die jeweils nahe den seitlichen Flügeln (14) angeordnet sind.

6. Kabelkanal nach einem der Ansprüche 2 bis 5, dadurch gekennzeichnet, daß die Querdrähte (12) einen Durchmesser (D4) haben, der sich von demjenigen (D3 oder D2) von zumindest bestimmten der Längsdrähte (11), anders als die Längsdrähte (11) am Rand der seitlichen Flügel (14), unterscheidet.

7. Kabelkanal nach Anspruch 6, dadurch gekennzeichnet, daß die Querdrähte (12) einen Durchmesser (D4) aufweisen, der zwischen demjenigen (D2) der Längsdrähte (11) des Bodens (13), die den seitlichen Flügeln (14) am nächsten liegen, und demjenigen (D3) der anderen Längsdrähte (11) des Bodens (13) liegt.

8. Kabelkanal nach einem der Ansprüche 2 bis 7, dadurch gekennzeichnet, daß wenigstens derjenige der Längsdrähte (11) der seitlichen Flügel (14), der dem Boden (13) am nächsten ist, einen Durchmesser (D2) gleich demjenigen Durchmesser (D2) der Längsdrähte (11) des Bodens (13) hat, die den seitlichen Flügeln (14) am nächsten sind.

## Claims

1. A cable conduit of the type formed by a lattice of wires comprising, on the one hand, longitudinal wires (11) which run longitudinally over its entire length and, on the other hand, arranged transversely at intervals along these longitudinal wires (11) by being duly secured thereto, transverse wires (12) which are shaped into a U, the assembly altogether forming, in the manner of a duct, a bottom (13) and two lateral flanges (14), characterised in that at least one of the longitudinal wires (11) other than the longitudinal wires (11) bordering the lateral flanges (14) is of smaller cross-section than that of the other wires.

2. A cable conduit according to Claim 1, characterised in that, in the case of round wires of circular cross-section, at least one of the longitudinal wires (11) other than the longitudinal wires (11) bordering the lateral flanges (14) is of smaller diameter than that of the other wires.

3. A cable conduit according to Claim 2, characterised in that all the longitudinal wires (11) of the bottom (13) other than those nearest the lateral flanges (14) are of a smaller diameter (D3) than that (D2) of the other longitudinal wires (11) other than the longitudinal wires (11) bordering these lateral flanges (14).

4. A cable conduit according to Claim 3, characterised in that the ratio between the diameters (D3) and (D2) is between 0 and 0.9.

5. A cable conduit according to Claim 4, characterised in that the bottom (13) only comprises two longitudinal wires (11) each arranged respectively in the vicinity of the lateral flanges (14).

6. A cable conduit according to any one of Claims 2 to 5, characterised in that the transverse wires (12) are of a diameter (D4) different to that (D2 or D3) of at least some of the longitudinal wires (11) other than the longitudinal wires (11) bordering the lateral flanges (14).

7. A cable conduit according to Claim 6, characterised in that the transverse (12) are of an intermediate diameter (D4) between that (D2) of the longitudinal wires (11) of the bottom (13) nearest the lateral flanges (14) and that (D3) of the other longitudinal wires (11) of this bottom (13).

8. A cable conduit according to any one of Claims 2 to 7, characterised in that the at least one of the longitudinal wires (11) of the lateral flanges (14) which is nearest the bottom (13) is of a diameter (D2) equal to that (D2) of the longitudinal wires (11) of this bottom (13) which are nearest these lateral flanges (14).
